# EUROPÄISCHE PATENTSCHRIFT

(11) **EP 2 687 924 B1**
(45) Veröffentlichungstag und Bekanntmachung des Hinweises auf die Patenterteilung: **16.08.2023**
(21) Anmeldenummer: 13172057.5
(22) Anmeldetag: 14.06.2013
(51) Int. Cl.: G05B 13/02, A01D 41/127

(54) **Selbstfahrende landwirtschaftliche Arbeitsmaschine**
Self-propelled agricultural machine
Machine agricole automobile

(30) Priorität: 16.07.2012 DE 102012106390; 13.06.2013 DE 102013106133
(43) Veröffentlichungstag der Anmeldung: 22.01.2014
(73) Patentinhaber: CLAAS Selbstfahrende Erntemaschinen GmbH, 33428 Harsewinkel (DE)
(72) Erfinder: Wilken, Andreas, 49143 Bissendorf (DE); Neu, Sebastian, 49196 Bad Laer (DE); Heitmann, Christoph, 48231 Warendorf (DE); Baumgarten, Joachim, 48361 Beelen (DE); Bussmann, Christoph, 33428 Harsewinkel (DE); Vöcking, Henner, 33397 Rietberg (DE); Kettelhoit, Boris, 33335 Gütersloh (DE)
(74) Vertreter: CLAAS Gruppe

(56) Entgegenhaltungen:
- EP-A1- 2 060 164
- EP-A1- 2 060 165
- EP-A2- 0 740 896
- DE-A1-102006 044 628
- DE-A1-102010 017 676

## Beschreibung

Die vorliegende Erfindung betrifft eine selbstfahrende landwirtschaftliche Arbeitsmaschine mit Arbeitsorganen, deren Arbeitsparameter durch zumindest eine Steuer- und Regeleinrichtung automatisiert einstellbar sind gemäß dem Oberbegriff des Anspruches 1.

Aus dem Stand der Technik ist es bekannt Arbeits- und Qualitätsparameter einer landwirtschaftlichen Arbeitsmaschine mittels einer Steuer- und Regeleinrichtung zu überwachen und zu optimieren. Die DE 10 2006 044 628 schlägt hierfür ein Verfahren vor, bei dem stets eine bestimmte Anzahl von Parametern in Abhängigkeit voneinander optimiert werden. Diese punktuelle Regelung von Maschinenparametern wird unter anderem in der DE 10 2009 009 767 dahingehend weiterentwickelt, dass ereignisabhängig eine Optimierung einstellbarer Maschinenparameter vorgenommen wird, wobei der Bediener der landwirtschaftlichen Arbeitsmaschine mittels einer Anzeigeeinheit stets über die ablaufenden Optimierungsvorgänge informiert gehalten wird. Aufgrund dessen, dass derartige Systeme sehr präzise die Arbeits- und Qualitätsparameter einer landwirtschaftlichen Arbeitsmaschine optimieren können ist aus der DE 10 2010 017 676 ein Regelungssystem bekannt geworden, welches die Auswahl einer geeigneten Prozessführungsstrategie an den Verwendungszweck des Erntegutes koppelt. Auf diese Weise wird sichergesellt, dass die Optimierung der Arbeits- und Qualitätsparameter nur so genau wie notwendig und nicht so genau wie möglich betrieben wird. Dies reduziert einerseits den Regelungsaufwand und stellt andererseits sicher, dass in Abhängigkeit von den jeweiligen Qualitätskriterien pro Zeiteinheit ein maximaler Erntegutdurchsatz realisierbar ist. Ferner beschreiben EP2060164 A1 und EP2060165 A1 eine selbstfahrende landwirtschaftliche Arbeitsmaschine bzw. eine selbstfahrende landwirtschaftliche Erntemaschine. EP0740896 A2 beschreibt ein Verfahren zur Einsatzoptimierung von Landmaschinen.

Diese bekannten Optimierungsmethoden gelangen dann an ihre Grenzen, wenn die an die Bedingungen der jeweiligen Arbeitsorgane angepassten Regelungsalgorithmen unterschiedliche Gutdurchsatzwerte für ein optimales Arbeiten des jeweiligen Arbeitsorgans ermitteln. Daher war bei derartigen Regelungen bisher vorgesehen, dass die Fahrgeschwindigkeit der landwirtschaftlichen Arbeitsmaschine vorgegeben wurde und die Optimierung der Arbeitsweise der Arbeitsorgane innerhalb dieser Fahrgeschwindigkeitsgrenzen vorgenommen wird. Dies konnte bisher zu dem Nachteil führen, dass die landwirtschaftliche Arbeitsmaschine insgesamt nicht in ihrem optimalsten Arbeitspunkt betrieben wird.

Aufgabe der vorliegenden Erfindung ist es daher, die Steuer- und Regeleinrichtung einer landwirtschaftlichen Arbeitsmaschine derart weiterzuentwickeln, dass eine qualitativ hochwertige Regelung der landwirtschaftlichen Arbeitsmaschine möglich wird.

Diese Aufgabe wird erfindungsgemäß durch die kennzeichnenden Merkmale des unabhängigen Anspruches 1 gelöst.

Indem die Steuer- und Regeleinrichtung einer selbstfahrenden landwirtschaftlichen Arbeitsmaschine ein Prozesskoordinator umfasst, der zumindest einen gemeinsamen Parameter der jeweiligen Arbeitsorgane auswertet, und zumindest für diesen Parameter einen Wert ermittelt, bei dem zumindest die durch die Steuer- und Regeleinrichtung überwachten Arbeitsorgane optimal arbeiten und dieser ermittelte Wert des zumindest einen gemeinsamen Parameters als Führungsgröße der Steuer- und Regelungseinrichtung verwendet wird ist sichergestellt, dass die landwirtschaftliche Arbeitsmaschine insgesamt in ihrem optimalsten Betriebspunkt betrieben werden kann.

Eine besonders effiziente Betriebspunktoptimierung der landwirtschaftlichen Arbeitsmaschine ergibt sich dann, wenn als Parameter der maximal verarbeitbare Gutdurchsatz und/oder die maximal verarbeitbare Schichthöhe der jeweiligen Arbeitsorgane ausgewertet wird.

Ein besonders effizient arbeitender Regelkreis ergibt sich in einer vorteilhaften Ausgestaltung der Erfindung dann, wenn der Prozesskoordinator aus dem für das jeweilige Arbeitsorgan ermittelten maximal verarbeitbaren Gutdurchsatz oder die maximal verarbeitbare Schichthöhe den optimierten Wert ermittelt und diesen als Führungsgrö-βe für die Steuer- und Regeleinrichtung definiert.

Damit sichergestellt ist, dass kein Arbeitsorgan der landwirtschaftlichen Arbeitsmaschine in einem suboptimalen Bereich arbeitet, ist in einer weiteren vorteilhaften Ausgestaltung vorgesehen, dass der optimierte Wert dem niedrigsten der ermittelten maximalen Gutdurchsätze oder Schichthöhen entspricht.

Die Qualität des Optimierungsergebnisses lässt sich dadurch noch steigern, wenn die Steuer- und Regeleinrichtung neben Arbeitsparametern auch Qualitätsparameter der landwirtschaftlichen Arbeitsmaschine überwacht und regelt und wobei die Regelung der Arbeits- und Qualitätsparameter eines oder mehrerer Arbeitsorgane in Einstellautomaten hinterlegt ist. Ein besonders wirksamer Einfluss auf eine effiziente Arbeitsweise der landwirtschaftlichen Arbeitsmaschine wird in diesem Zusammenhang dann erreicht, wenn die Einstellautomaten zumindest einen Reinigungsautomat und einen Abscheideautomat umfassen.

Indem die von dem Prozesskoordinator ermittelte Führungsgröße der Steuer- und Regeleinrichtung an einen die Fahrgeschwindigkeit vorgebenden Fahrgeschwindigkeitsregler übergeben wird und aus den in dem Fahrgeschwindigkeitsregler hinterlegten Kennlinien eine Fahrgeschwindigkeit der landwirtschaftlichen Arbeitsmaschine bestimmt wird, wird auf einfache Weise sichergestellt, dass keines der Arbeitsorgane überlastet wird.

Ein besonders effizient arbeitender Regelkreis ergibt sich dann, wenn in einer vorteilhaften Ausgestaltung der Erfindung die Arbeits- und/oder Qualitätsparameter der landwirtschaftlichen Arbeitsmaschine in einem kontinuierlich arbeitenden Regelkreis mittels der Einstellautomaten überwacht und geregelt werden und das der Prozesskoordinator in demselben Regelkreis kontinuierlich einen optimierten Wert des Gutdurchsatzes und/oder der Schichthöhe als Führungsgröße der Regelung an den Fahrgeschwindigkeitsregler und die Einstellautomaten übergibt und diese ebenfalls kontinuierlich in Abhängigkeit von dieser Führungsgröße ein Fahrgeschwindigkeitssignal zur Anpassung der Fahrgeschwindigkeit der landwirtschaftlichen Arbeitsmaschine und optimierte Werte der Arbeitsparameter generieren.

Weitere vorteilhafte Ausgestaltungen der Erfindungen sind den Unteransprüchen zu entnehmen und werden nachfolgend anhand von in Zeichnungen dargestellten Ausführungsbeispielen näher erläutert.

Es zeigen:
- Fig. 1: eine schematische Darstellung einer als Mähdrescher ausgeführten landwirtschaftlichen Arbeitsmaschine;
- Fig. 2: eine schematische Darstellung einer Anzeigestruktur einer Steuer- und Regelungseinrichtung;
- Fig. 3a - 3d: schematische Darstellungen der Anzeigestruktur der Steuer- und Regelungseinrichtung in unterschiedlichen Betriebssituationen;
- Figur 4: eine schematische Darstellung des Fahrerassistenzsystems;
- Figur 5: verschiedene Betriebszustände des Fahrerassistenzsystems.
- Figur 6: eine schematische Darstellung des erfindungsgemäßen Regelkreises

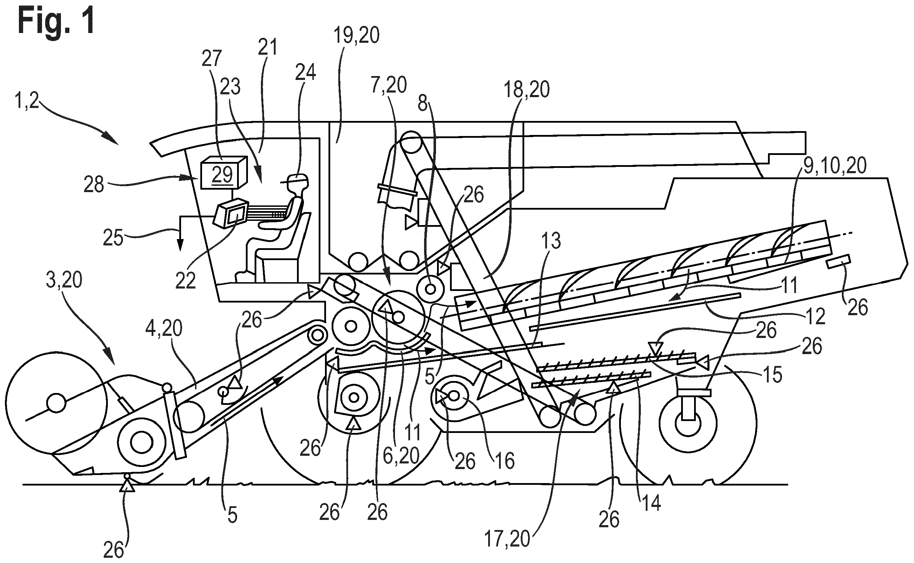

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Trennrotor 9 ausgeführte Trenneinrichtung 10 übergeben wird. In dem rotierenden Trennrotor 9 wird der Gutstrom 5 so gefördert, dass in dem Gutstrom 5 enthaltene freibewegliche Körner 11 im untenseitigen Bereich des Trennrotors 9 abgeschieden werden. Es liegt im Rahmen der Erfindung, dass die im dargestellten Ausführungsbeispiel als Trennrotor 9 ausgeführte Trenneinrichtung 10 auch als an sich bekannter und daher nicht dargestellter Hordenschüttler ausgeführt sein kann. Sowohl die am Dreschkorb 6 als auch am Trennrotor 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet.

Weiter verfügt die landwirtschaftliche Arbeitsmaschine 1 über eine Fahrzeugkabine 21 in der zumindest eine mit einer Anzeigeeinheit 22 versehene Steuer- und Regeleinrichtung 23 angeordnet ist, mittels derer automatisch oder vom Bediener 24 der landwirtschaftlichen Arbeitsmaschine 1 initiiert eine Vielzahl von an sich bekannten und daher nicht näher erläuterten Prozessen gesteuert werden können. Die Steuer- und Regeleinrichtung 23 kommuniziert über ein sogenanntes Bussystem 25 in an sich bekannter Weise mit einer Vielzahl von Sensorsystemen 26. Einzelheiten bezüglich der Struktur der Sensorsysteme 26 sind detailliert in der DE 101 47 733 beschrieben, deren Inhalt hiermit vollumfänglich Bestandteil der Offenbarung dieser Patentanmeldung wird, sodass im Folgenden die Struktur der Sensorsysteme 26 nicht nochmals beschrieben wird. Zudem ist die Steuer- und Regeleinrichtung 23 mit einem eine Anzeigeeinheit 27 umfassenden Fahrerassistenzsystem 28 gekoppelt. Es liegt im Rahmen der Erfindung, dass das Fahrerassistenzsystem 28 auch unmittelbar in die Steuer- und Regeleinrichtung 23 integriert sein kann und die Visualisierung der von dem Fahrerassistenzsystem 28 bereitgestellten und nachfolgend noch näher erläuterten Informationen 29 auch unmittelbar in dem der Steuer- und Regeleinrichtung 23 zugeordneten Anzeigeeinheit 22 erfolgt.

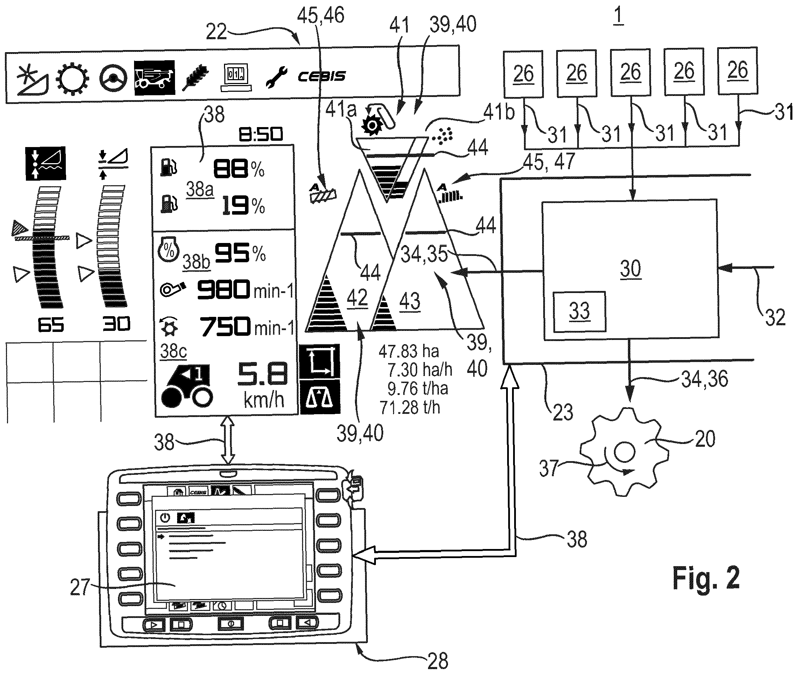

Fig. 2 zeigt eine schematische Darstellung der Anzeigeeinheit 22 der Steuer- und Regeleinrichtung 23 sowie die der Steuer- und Regeleinrichtung 23 zugeordnete und mit der Anzeigeeinheit 22 gekoppelte Recheneinheit 30. Die Recheneinheit 30 ist so beschaffen, dass sie neben den von den Sensorsystemen 26 generierten internen Informationen 31, externe Informationen 32 und in der Recheneinheit 30 selbst hinterlegte Informationen 33, wie etwa Expertenwissen, zu einer Vielzahl von Ausgangssignalen 34 verarbeiten kann. Die Ausgangssignale 34 sind dabei so beschaffen, dass sie zumindest Anzeigesteuersignale 35 und Arbeitsorgansteuersignale 36 umfassen, wobei erstere die Inhalte der Anzeigeeinheit 22 bestimmen und letztere die Änderung der unterschiedlichsten Arbeitsparameter 37 der Arbeitsorgane 20 der landwirtschaftlichen Arbeitsmaschine 1 bewirken, wobei Pfeil 37 symbolisch für die Dreschtrommeldrehzahl steht. Zudem ist die Steuer- und Regeleinrichtung 23, wie bereits beschrieben, mit einem Fahrerassistenzsystem 28 gekoppelt, wobei das Fahrerassistenzsystem 28 so in die landwirtschaftliche Arbeitsmaschine 1 integriert ist, dass es Daten 38 in noch näher zu beschreibender Weise sowohl mit der Steuer- und Regeleinrichtung 23 als auch mit der dieser zugeordneten Anzeigeeinheit 22 austauschen kann. Die in Figur 2 dargestellten Inhalte der Anzeigeeinheiten 22, 27 sind beispielhaft und werden nachfolgend näher beschrieben. Die der Steuer- und Regeleinrichtung 23 zugeordnete Anzeigeeinheit 22 umfasst in ihrem zentralen Bereich ein vom Bediener 24 frei definierbares sogenanntes Hotkey-Fenster 38 in welchem wichtige Maschineninformationen, wie etwa der Füllstand des Kraftstofftanks 38a, Maschinenparametereinstellungen 38b und die Fahrgeschwindigkeit 38c visualisiert sind.

Die Anzeigeeinheit 22 umfasst in ihrem rechtsseitigen Bereich Anzeigeelemente 39 zur Visualisierung aktueller Werte bestimmter Qualitätsparameter 40 der landwirtschaftlichen Arbeitsmaschine 1. Im dargestellten Ausführungsbeispiel visualisiert das obenseitig angeordnete Anzeigeelement 39 die Zusammensetzung der sogenannten "Überkehr" 41, wobei die linkseitige Darstellung das "Überkehrvolumen" 41a und die rechtsseitige Darstellung den "Kornanteil in der Überkehr" 41b visualisiert. Das untere, linke Anzeigeelement 39 visualisiert die sogenannten "Abscheideverluste" 42, d.h. diejenigen Kornverluste, die von der als Trennrotor 9 oder Hordenschüttler ausgeführten Trenneinrichtung 10 im rückwärtigen Bereich der landwirtschaftlichen Arbeitsmaschine 1 aus dieser ausgetragen und nicht in den Korntank 19 gefördert werden. Das untere, rechte Anzeigeelement 39 visualisiert die sogenannten "Reinigungsverluste" 43, wobei hier diejenigen Kornverluste angezeigt werden, die von der Reinigungseinrichtung 17 in analoger Weise zur Trenneinrichtung 10 aus der landwirtschaftlichen Arbeitsmaschine 1 ausgetragen und nicht in den Korntank 19 gefördert werden. Jedes der Anzeigeelemente 39 umfasst zudem einen als waagerechten Strich ausgeführten Sollwertanzeiger 44, der das maximal zulässige und vom Bediener 24 zuvor definierte Verlustniveau des jeweiligen Qualitätsparameters 40 definiert, sodass der Bediener 24 schnell erfassen kann, ob die landwirtschaftliche Arbeitsmaschine 1 eine hinreichende Arbeitsqualität aufweist.

Aufgrund der komplexen Zusammenhänge zwischen verschiedensten Maschinenparametern 38a-c und zumindest den Qualitätsparametern 40 sind die Einstelloptionen für die Trenneinrichtung 10 und die Reinigungseinrichtung 17 in sogenannten Einstellautomaten 45 hinterlegt. Im dargestellten Ausführungsbeispiel sind gemäß Figur 2 ein Abscheideautomat 46 für die Optimierung der Arbeitsweise der Trenneinrichtung 10 und ein Reinigungsautomat 47 für die Optimierung der Arbeitsweise der Reinigungseinrichtung 17 programmiert und in der Steuer- und Auswerteinrichtung 23 hinterlegt. Es liegt im Rahmen der Erfindung, dass jeder der verfügbaren Einstellautomaten 45 auch ganz oder teilweise in dem Fahrerassistenzsystem 28 hinterlegt sein kann.

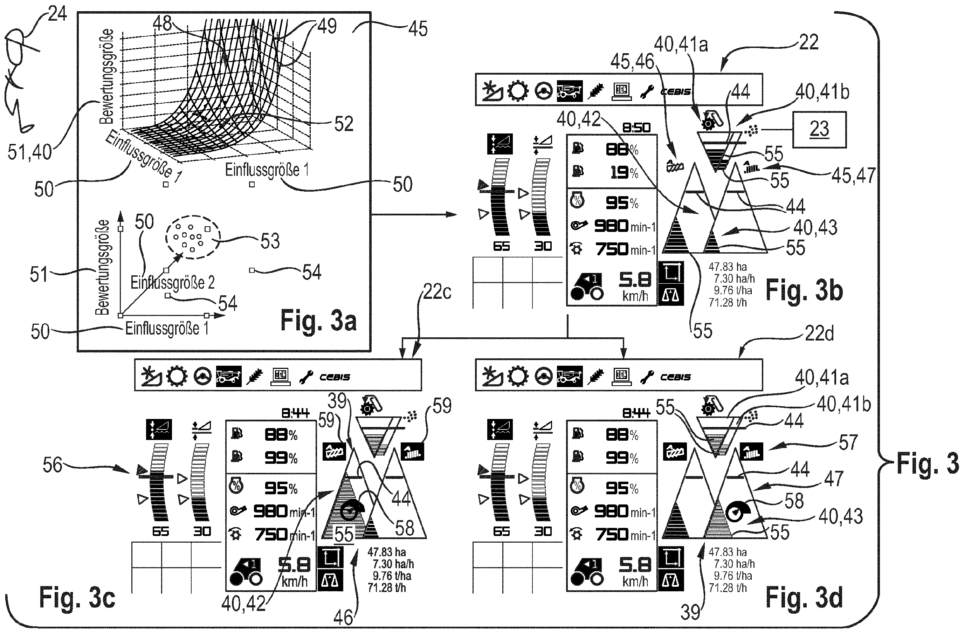

Fig. 3 beschreibt anhand schematischer Abbildungen die der Steuer- und Regeleinrichtung 23 zugeordnete Anzeigeeinheit 22 sowie die verfügbaren Einstellautomaten 45 näher. Fig. 3a zeigt zum besseren Verständnis der Wirkungsweise der verfügbaren Einstellautomaten 45 eine schematisch Struktur derselben. Sowohl der Abscheideautomat 46 als auch der Reinigungsautomat 47, wie im Übrigen jeder für die Einstellung von Arbeitsorganen 20 der landwirtschaftlichen Arbeitsmaschine 1 vorgesehene Einstellautomat 45, werden durch Kennlinienfelder 48 definiert. Die ein Kennlinienfeld 48 bildenden Kennlinien 49 beschreiben in Abhängigkeit von Einflussgrößen 50 verschiedene Bewertungsgrößen 51 der landwirtschaftlichen Arbeitsmaschine 1. Im vorliegenden Fall bildet die Bewertungsgröße 51 die zuvor beschriebenen Qualitätsparameter 40. Die Einflussgrößen 50 umfassen im dargestellten Ausführungsbeispiel zumindest die Drehzahl einer als Trennrotor 9 ausgeführten Trenneinrichtung 10 sowie die Drehzahl des der Reinigungseinrichtung 17 zugeordneten Gebläses 16 und die Öffnungsweite der Siebebenen 14, 15. Während des Arbeitseinsatzes der landwirtschaftlichen Arbeitsmaschine 1, hier der Ernteeinsatz des Mähdreschers 2, werden die ermittelten Betriebspunkte 52 unmittelbar in das Kennlinienfeld 48 übernommen. Gemäß der unteren Darstellung in Fig. 3a arbeitet die landwirtschaftliche Arbeitsmaschine 1 häufig nur in einem kleinen Bereich 53 des jeweils hinterlegten Kennlinienfeldes 48. Damit das in der Steuer- und Regeleinrichtung 23 hinterlegte Kennlinienfeld 48 den jeweils zu modellierenden Abscheide- oder Reinigungsprozess im gesamten vordefinierten Wertebereich gut wiedergibt werden in regelmäßigen Abständen Messpunkte 54 angefahren, die nicht in dem gegenwärtig durchlaufenen Bereich 53 des jeweiligen Kennlinienfeldes 48 und/oder in seinen Grenzbereichen liegen. Dies hat den Effekt, dass die in den Einstellautomaten 45 hinterlegten Abscheide- oder Reinigungsmodelle auch im Grenzbereich der Kennlinienfelder 48 und in zur Zeit nicht durchlaufenen Bereichen des jeweiligen Kennlinienfeldes 48 den jeweiligen Prozess hinreichend genau abbilden.

Wird die landwirtschaftliche Arbeitsmaschine 1, im hier dargestellten Ausführungsbeispiel der Mähdrescher 2, mit aktiviertem Abscheideautomat 46 und aktiviertem Reinigungsautomat 47 betrieben, hat die der Steuer- und Regeleinrichtung 23 zugeordnete Anzeigeeinheit 22 die in Fig. 3b gezeigte und zuvor beschriebene Struktur. Der Wert jedes Qualitätsparameters 40, hier das "Überkehrvolumen" 41a, der "Kornanteil in der Überkehr" 41b, der "Abscheideverlust" 42 und, der "Reinigungsverlust" 43, wird qualitativ in Form farblich hervorgehobener Flächen 55 visualisiert. Jede der Flächen 55 ändert ihre Ausdehnung in Abhängigkeit von den durch die Steuer- und Regeleinrichtung 23 ermittelten Werten für "Abscheideverlust" 42, "Kornverlust" 43 und "Überkehrzusammensetzung" 41a, 41b, wobei es Aufgabe der Einstellautomaten 45 ist, die Qualitätskriterien 40 in einem Optimum und unterhalb des jeweiligen Sollwertanzeigers 44 zu halten.

Muss nun ein definierter Messpunkt 54 durch die Einstellautomaten 45 angefahren werden, ergeben sich für das hier beschriebene Ausführungsbeispiel gemäß den Figuren 3c und 3d zwei Aktivierungszustände 56, 57. In dem einen Aktivierungszustand 56, Fig. 3c, fährt der Abscheideautomat 46 automatisch einen Messpunkt 54 an, der entweder außerhalb des gerade durchlaufenen Bereichs 53 oder im Grenzbereich des die Kornabscheidung an der Trenneinrichtung 10 beschreibenden Kennlinienfeldes 48 liegt. Damit der Bediener 24 der landwirtschaftlichen Arbeitsmaschine 1 darüber informiert ist, dass der Abscheideautomat 46 einen nicht im gegenwärtigen Arbeitsbereich 53 liegenden Messpunkt 54 anfährt, wird in der Anzeigeeinheit 22c die den Qualitätsparameter 40 "Abscheideverlust" 42 visualisierende Fläche 55 verblassend dargestellt. Zudem kann vorgesehen sein, dass die verblassend dargestellt Fläche 55 in ihrer Größe entweder eingefroren wird oder weiterhin die Änderung der "Abscheideverluste" 42 visualisiert. Letztere Variante hält den Bediener 24 über den Verlauf die Änderung informiert, was vor Erreichen eines eingeschwungenen Zustandes auch dazu führen kann, dass die "Abscheideverluste" 42 auch kurzzeitig die Marke des Sollwertanzeigers 44 überschreiten. Um die Optimierung eines nicht im gegenwärtigen Arbeitsbereich 53 liegenden Messpunktes 54 gut erkennbar für den Bediener 24 zu signalisieren ist vorgesehen, dass das den "Abscheideverlust" 42 visualisierende Anzeigeelement 39 durch ein charakteristisches Symbol 58 zumindest partiell überblendet wird, während der partiell überblendete Arbeits- und/oder Qualitätsparameter 37, 40 passiv, vorzugsweise verblassend, dargestellt wird.

In analoger Weise kann die Struktur der Anzeigeeinheit 22 in dem weiteren Aktivierungszustand 57 gemäß Fig. 3d angepasst werden. In diesem Fall fährt der Reinigungsautomat 47 automatisch einen Messpunkt 54 an, der entweder außerhalb des gerade durchlaufenen Bereichs 53 oder im Grenzbereich des die Kornabscheidung an der Reinigungseinrichtung 17 beschreibenden Kennlinienfeldes 48 liegt. Damit der Bediener 24 der landwirtschaftlichen Arbeitsmaschine 1 darüber informiert ist, dass der Reinigungsautomat 47 einen nicht im gegenwärtigen Arbeitsbereich 53 liegenden Messpunkt 54 anfährt, werden in der Anzeigeeinheit 22d die die Qualitätsparameter 40 "Reinigungsverlust" 43, "Überkehrvolumen" 41a, "Kornanteil in der Überkehr" 41b, visualisierenden Flächen 55 verblassend dargestellt. Zudem kann vorgesehen sein, dass die verblassend dargestellten Flächen 55 in ihrer Größe entweder eingefroren werden oder weiterhin die Änderung der"Reinigungsverluste" 43, des "Überkehrvolumens" 41a und des "Kornanteils in der Überkehr" 41b visualisieren. Letztere Variante hält den Bediener 24 über den Verlauf die Änderungen informiert, was vor Erreichen eines eingeschwungenen Zustandes ebenfalls dazu führen kann, dass die "Reinigungsverluste" 43, das "Überkehrvolumen" 41a und der "Kornanteil in der Überkehr" 41b kurzzeitig die Marke der jeweiligen Sollwertanzeiger 44 überschreiten. Um die Optimierung eines nicht im gegenwärtigen Arbeitsbereich 53 liegenden Messpunktes 54 gut erkennbar für den Bediener 24 zu signalisieren ist auch hier erfindungsgemäß vorgesehen, dass zumindest das den "Reinigungsverlust" 43 visualisierende Anzeigeelement 39 durch ein charakteristisches Symbol 58 zumindest partiell überblendet wird, während der partiell überblendete Arbeits- und/oder Qualitätsparameter 37, 40 passiv, vorzugsweise verblassend, dargestellt wird.

In an sich bekannter Weise kann jeder der vorhandenen Einstellautomaten 45 voneinander unabhängig automatisch oder vom Bediener 24 ausgelöst aktiviert und deaktiviert werden, sodass die Anzahl der gleichzeitig arbeitenden Einstellautomaten 45 beliebig wählbar ist. Vorzugsweise sind stets alle Einstellautomaten 45 zur Optimierung der Arbeitsweise der landwirtschaftlichen Arbeitsmaschine 1 aktiviert. Es liegt im Rahmen der Erfindung, dass eine gezielte Abschaltung eines Einstellautomaten 45 auch dadurch bewirkt werden kann, dass der Bediener 24 gezielt einen Arbeitsparameter 37 durch Eingabe eines definierten Wertes ändert. Findet die Übersteuerung durch den Bediener 24 während des gezielten Anfahrens von Messpunkten 54 statt, werden die charakteristischen Symbole 58 ausgeblendet und die gegebenenfalls verblassende Darstellung der Arbeits- und/oder Qualitätsparameter 37, 40 aufgehoben. In diesem Zusammenhang kann zudem vorgesehen sein, das der Bediener 24 in der Anzeigeeinheit 22 einen expliziten Hinweis auf die Deaktivierung von Einstellautomaten 45 erhält.

Da die Steuer- und Regeleinrichtung 23 in an sich bekannter Weise so beschaffen ist, dass sie stets die Änderung der Qualitätsparameter 40 visualisiert, unabhängig davon, ob Einstellautomaten 45 aktiviert sind oder nicht kann vorgesehen sein, dass in der Anzeigeeinheit 22 die Einstellautomaten 45 repräsentierende Piktogramme 59 positioniert sind, die bei aktivem Einstellautomat 45 zumindest farblich hervorgehoben visualisiert werden. Die Deaktivierung des jeweiligen Einstellautomaten 45 wird entsprechend durch Abblendung des jeweiligen Piktogramms 59 visualisiert.

Weiterkann vorgesehen sein, dass jeder Einstellautomat 45 über sein eigenes Kennlinienfeld 48 verfügt, wobei einzelne Einstellautomaten 45, auch unter Einbeziehung einer Vielzahl von Kennlinienfeldern 48 eine Optimierung der Arbeitsweise der landwirtschaftlichen Arbeitsmaschine 1 bewirken. Im dargestellten Ausführungsbeispiel berücksichtigt der Reinigungsautomat 47 Kennlinienfelder 48, die sowohl die "Reinigunsgverluste" 43 als auch das "Überkehrvolumen" 41a und den "Kornanteil in der Überkehr" 41b berücksichtigen. Damit die berücksichtigten Kennlinienfelder 48 auch bei schwankenden Einflussgrößen 50 brauchbare Werte für die Bewertungsgrö-βen 51 und damit für eine optimale Arbeitsweise der landwirtschaftlichen Arbeitsmaschine 1 liefern, ist vorgesehen, dass das Anfahren nicht im gegenwärtigen Arbeitsbereich 53 oder in den Grenzbereichen der Kennlinienfelder 48 liegender Messpunkte 54 in definierten zeitlichen Abständen und auf eine bestimmte Anzahl von Messpunkten 54 beschränkt erfolgt. Vorzugsweise ist die Anzahl der gezielt ansteuerbaren Messpunkte 54 auf vier beschränkt. Die definierten Zeitintervalle, innerhalb derer die verschiedenen Messpunkte 54 wiederholt angesteuert werden, sind so beschaffen, dass die Dauer des Zeitintervalls mit zunehmender Einsatzzeit der landwirtschaftlichen Arbeitsmaschine 1 zunimmt und vorzugsweise zu Beginn der Einsatzzeit kleiner als 15 Minuten ist und sich mit zunehmender Einsatzzeit auf 30 Minuten erhöht. Zudem kann vorgesehen sein, dass die Steuer- und Regeleinrichtung 23 und damit auch die Einstellautomaten 45 automatisch mit Inbetriebnahme der landwirtschaftlichen Arbeitsmaschine 1 aktiviert werden. In diesem Zusammenhang kann zudem vorgesehen sein, dass bei inaktiven Einstellautomaten 45 ein Hinweis auf eine Effizienzsteigerung durch Aktivierung des jeweiligen Einstellautomaten 45 an den Bediener 24 generierbar ist.

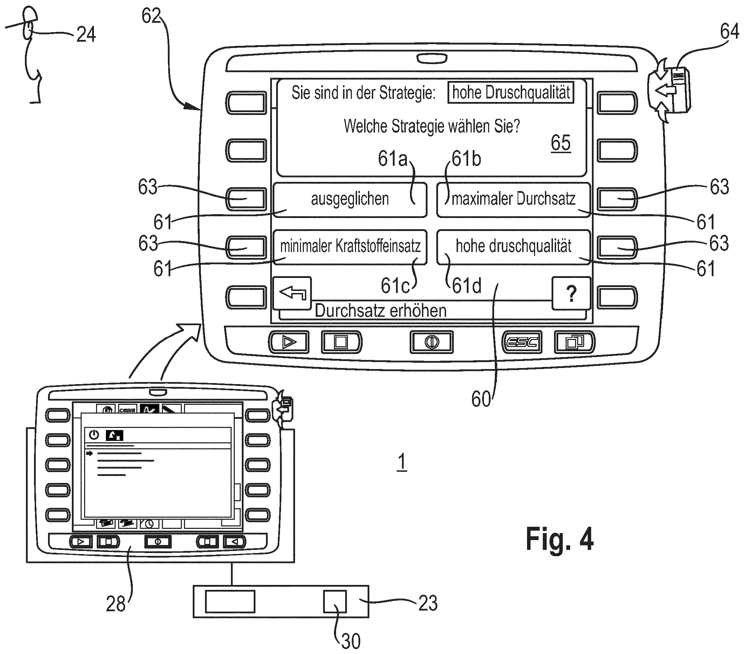

Figur 4 zeigt eine Detailansicht des Fahrerassistenzsystems 28. In dem dem Fahrerassistenzsystem 28 zugeordneten Display 60 sind zunächst die verfügbaren Prozessführungsstrategien 61 visualisiert. Im dargestellten Ausführungsbeispiel sind beispielhaft vier Prozessführungsstrategien 61 auswählbar, nämlich "ausgeglichen" 61a; "maximaler Durchsatz" 61b; "minimaler Kraftstoffeinsatz" 61c und "hohe Druschqualität" 61d.

Wird die Prozessführungsstrategie "maximaler Durchsatz" 61b gewählt, regelt das Fahrerassistenzsystem 28 die Arbeitsweise der landwirtschaftlichen Arbeitsmaschine 1 so, dass der maximal mögliche Durchsatz, bei dem gerade noch die vordefinierten Sollwerte für einen zulässigen Kornverlust, bestehend aus Abscheideverlust 42 und Reinigungsverlust 43, eingehalten werden. Wird die Prozessführungsstrategie "minimaler Kraftstoffeinsatz" 61c gewählt, regelt das Fahrerassistenzsystem 28 die Arbeitsweise der landwirtschaftlichen Arbeitsmaschine 1 so, dass der Antriebsenergiebedarf sinkt. Vorzugsweise wird dies dadurch erreicht, dass die Drehzahl eines oder mehrere Arbeitsorgane 20 reduziert wird. Arbeitet das Fahrerassistenzsystem 28 in der Prozessführungsstrategie "hohe Druschqualität" 61b wird neben niedrigen Kornverlusten ein geringer Körnerbruch und ein niedriger Beimengungsanteil im geernteten Korn angestrebt. Die Regelstrategie "ausgeglichen" 61a berücksichtig für alle optimierbaren Arbeits- und/oder Qualitätsparameter 37, 40 mittlere Niveaus, sodass sich insgesamt eine ausgewogene Arbeitsweise der landwirtschaftlichen Arbeitsmaschine 1 ergibt, ohne dass bestimmten Arbeits- und Qualitätsparametern 37, 40 eine Priorität zukommt.

Jede der Prozessführungsstrategien 61 ist je nach Beschaffenheit des das Fahrerassistenzsystem 28 und das Display 60 aufnehmenden Gehäuses 62 entweder via Touchscreen-Funktion auswählbar, wenn das Display 60 als Touchscreen-Monitor ausgebildet ist, oder über eine der jeweiligen Prozessführungsstrategie 61 zugeordnete Taste 63 aktivierbar. Es liegt im Rahmen der Erfindung, dass die Aktivierung der jeweiligen Prozessführungsstrategie 61 auch mittels eines Dreh-Drück-Schalters 64 bewirkbar ist. Im oberen Bereich des Displays 60 ist zudem ein Sichtfenster 65 positioniert, welches natürlichsprachige Kommentare umfasst und in Figur 4 einen Hinweis auf die gegenwärtig aktivierte Prozessführungsstrategie 61 gibt.

Gemäß den vorherigen Ausführungen ist das Fahrerassistenzsystem 28 mit der der landwirtschaftlichen Arbeitsmaschine 1 zugeordneten Steuer- und Regeleinrichtung 23 gekoppelt, wobei es auch denkbar ist, dass das Fahrerassistenzsystem 28 und die Steuer- und Regeleinrichtung 23 in nicht dargestellter Weise in einer einzigen Baueinheit zusammengefasst sind. Nachdem eine erste Prozessführungsstrategie 61 durch den Bediener 24 ausgewählt wurde werden die verschiedenen Arbeits- und Qualitätsparameter 37, 40 in der bereits beschriebenen Weise anhand der hinterlegten von Kennlinien 49 definierten Kennlinienfelder 48 optimiert. Ermittelt die der Steuer- und Regeleinrichtung 23 zugeordnete Recheneinheit 30, dass innerhalb einer gewählten Prozessführungsstrategie 61 definierte Grenzwerte für einen oder mehrere der Qualitätsparameter 40 nicht einhaltbar sind oder noch niedriger als vorgegeben sein könnten, schlägt das Fahrerassistenzsystem 28 erfindungsgemäß einen Wechsel der Prozessführungsstrategie 61 vor.

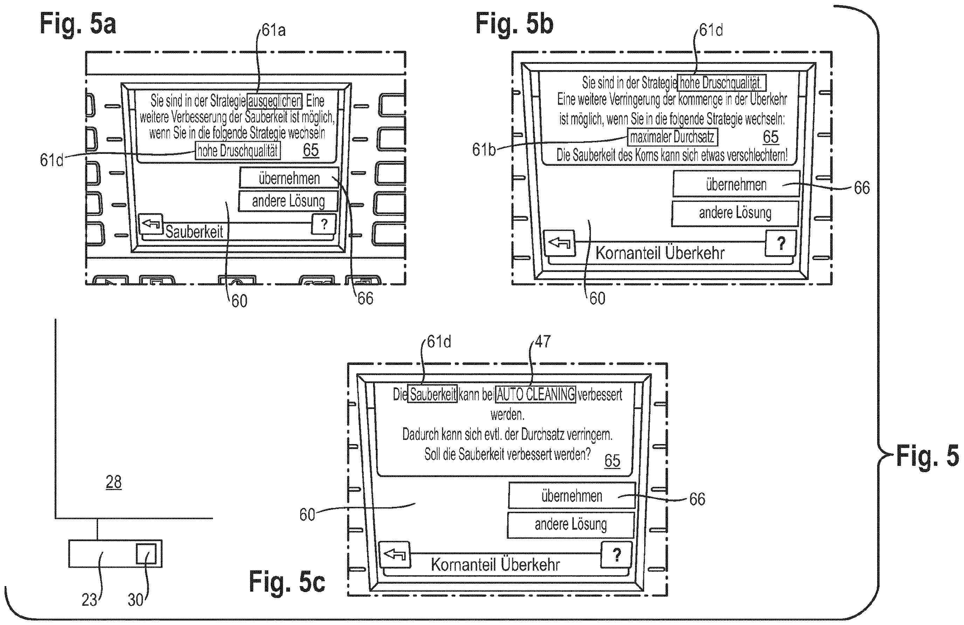

Figur 5 zeigt verschiedene Szenarien für einen Vorschlag zum Wechsel der Prozessführungsstrategie 61. In Figur 5a schlägt das Fahrerassistenzsystem 28 in dem seinem Display 60 zugeordneten Sichtfenster 65 in natürlichsprachiger Form vor, von der Prozessführungsstrategie "ausgeglichen" 61a in die Prozessführungsstrategie "hohe Druschqualität" 61d zu wechseln, um eine Verbesserung der Kornsauberkeit zu bewirken. In analoger Weise ist in Figur 5b dargestellt, wie das Fahrerassistenzsystem 28 einen Wechsel von der Prozessführungsstrategie "hohe Druschqualität" 61d in die Prozessführungsstrategie "maximaler Durchsatz" 61b in natürlichsprachiger Weise vorschlägt, um eine Verringerung der Kornmenge in der sogenannten Überkehr zu bewirken. Dieser Dialog ist wiederum in dem dem Display 60 zugeordneten Sichtfenster 65 visualisiert. Figur 5c zeigt schließlich einen Dialog, bei dem das Fahrerassistenzsystem 28 die Aktivierung des Reinigungsautomaten 47 vorschlägt, wobei der Reinigungsautomat 47 Bestandteil der Prozessführungsstrategie "hohe Druschqualität" 61d ist. Erfindungsgemäß schlägt das Fahrerassistenzsystem 28 einen Wechsel der Prozessführungsstrategie 61 dann vor, wenn die vorgegebenen Sollwerte eines oder mehrerer Qualitätsparameter 40 innerhalb der gewählten Prozessführungsstrategie 61 nicht erreichbar sind oder wenn das Fahrerassistenzsystem 28 erkennt, dass bei Wahl einer anderen Prozessführungsstrategie 61 noch günstigere Werte für einen oder mehrere der Qualitätsparameter 40 erreichbar sind.

Will der Bediener 24 der landwirtschaftlichen Arbeitsmaschine 1 den vom Fahrerassistenzsystem 28 vorgeschlagenen Wechsel der Prozessführungsstrategie 61 akzeptieren bestätigt er dies durch Aktivierung eines "Übernehmen"-Feldes 66. Der dadurch aktivierte Optimierungsprozess basiert auf einer Interaktion des Bedieners 24 mit dem Fahrerassistenzsystem 28. Während des Optimierungsprozesses werden dem Bediener 24 in der Anzeigeeinheit 22 der Steuer- und Regeleinrichtung 23 gemäß den Erläuterungen zu den Figuren 2 und 3 die durch das Fahrerassistenzsystem 28 bewirkten Änderungen der Arbeitsparameter 37 sowie deren Auswirkung auf die jeweiligen Qualitätsparameter 40 angezeigt. Das Fahrerassistenzsystem 28 ist dabei so beschaffen, dass der Bediener 24 die Optimierungsresultate bewerten muss. In Abhängigkeit von der Bewertung durch den Bediener wird der Optimierungsprozess fortgeführt oder beendet. Der Bediener 24 wird über die aus einem Prozessführungsstrategiewechsel resultierenden Auswirkungen auf die Arbeitsweise hingewiesen, indem in dem jeweiligen Sichtfenster 65 ergänzende natürlichsprachige Kommentare, etwa zum Einfluss auf bestimmte Qualitätsparameter 40, eingeblendet werden. Ergänzend lässt sich eine Beschreibung der vorgeschlagenen Prozessführungsstrategie 61 manuell abrufen und anzeigen oder automatisch einblenden, um dem Bediener 24 die Möglichkeit zu geben, die aktuell gewählte mit der vorgeschlagenen Prozessführungsstrategie 61 vergleichen zu können.

Ein weiterer Aspekt der Auswertung der Interaktion des Bedieners 24 mit dem Fahrerassistenzsystem 28 ist das Registrieren einer wiederholten Interaktion, die das selbe Optimierungsziel betrifft. Diese Feststellung wird herangezogen, um innerhalb des Optimierungsprozesses dieses Optimierungsziel stärker zu gewichten, sodass eine wiederholte Interaktion des Bedieners 24 mit dem Fahrerassistenzsystem 28 zur Optimierung desselben Arbeits- und/oder Qualitätsparameters 37, 40 das Fahrerassistenzsystem 28 veranlasst, einen Wechsel der Prozessführungsstrategie 61 vorzuschlagen.

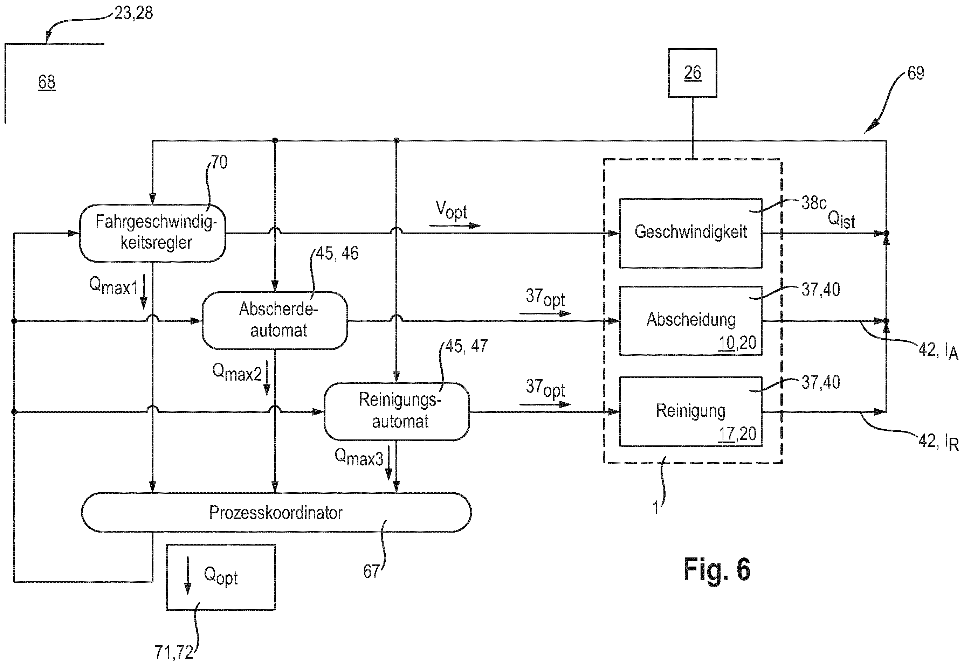

Figur 6 zeigt an Hand eines Signalflussbildes die Struktur einer den erfindungsgemä-βen Prozesskoordinator 67 umfassenden Steuer- und Regeleinrichtung 68. Es liegt im Rahmen der Erfindung, dass die den Prozesskoordinator 67 umfassende Steuer- und Regeleinrichtung 68 entweder von der bereits beschriebenen Steuer- und Regeleinrichtung 23 oder dem Fahrerassistenzsystem 28 gebildet wird. In erfindungsgemäßer Weise umfasst die Steuer- und Regeleinrichtung 68 die bereits beschriebenen Einstellautomaten 45 Abscheideautomat 46 und Reinigungsautomat 47. Weiter umfasst der die Einstellautomaten 45 und den Prozesskoordinator 66 aufnehmende Regelkreis 69 einen die Fahrgeschwindigkeit der landwirtschaftlichen Arbeitsmaschine 1 definierenden Fahrgeschwindigkeitsregler 70. Gemäß der Beschreibung zu den Figuren 1 und 2 verfügt die landwirtschaftliche Arbeitsmaschine 1 über eine Vielzahl von Sensorsystemen 26, die verschiedenste Arbeits- und Qualitätsparameter 37, 40, die Fahrgeschwindigkeit 38c sowie Ernteguteigenschaften sensieren. Fahrgeschwindigkeitsabhängig generieren die Sensorsysteme 26 in an sich bekannter Weise ein Ist-Signal Qist des die landwirtschaftliche Arbeitsmaschine durchlaufenden Erntegutstromes 5. Weiter generieren die der Trenneinrichtung 10 und der Reinigungseinrichtung 17 zugeordneten Sensorsysteme 26 die den Abscheideverlust 42 definierende

Abscheideverlustsignale IA und den Reinigungsverlust 43 definierende Reinigungsverlustsignale IR.

Das Ist-Signals Qist des Ernetgutdurchsatzes wird innerhalb des Regelkreises 69 an den Fahrgeschwindigkeitsregler 70 als Eingangssignal übergeben. In analoger Weise werden die Abscheideverlustsignale IA an den Abscheideautomat 46 und die Reinigungsverlustsignale IR an den Reingungsautomat 47 als deren Eingangssignale übergeben. Im Fahrgeschwindigkeitsregler 70 und den Einstellautomaten 45 werden aus diesen Eingangssignalen schließlich Gutdurchsatzsignale Qmax1, Qmax2, Qmax3 generiert, die fahrgeschwindigkeitsabhängig, reinigungsverlustabhängig und abscheideverlustabhängig jeweils den maximal verarbeitbaren Gutdurchsatz des Erntegutstromes 5 definieren. Diese Gutdurchsatzsignale Qmax1-3 werden sodann an den erfindungsgemäßen Prozesskoordinator 67 übergeben. Der Prozesskoordinator bestimmt aus den an ihn übergebenen Gutdurchsatzsignalen Qmax1-3 einen optimalen Gutdurchsatz und übergibt ein damit korrespondierendes optimales Gutdurchsatzsignal Qopt an den Fahrgeschwindigkeitsregler 70 und die Einstellautomaten 45. In der Regel wird das optimierte Gutdurchsatzsignal Qopt dem ermittelten niedrigsten Wert der maximalen Gutdurchsätze Qmax1-3 entsprechen.

Der Fahrgeschwindigkeitsregler 70 generiert hieraus schließlich ein optimiertes Fahrgeschwindigkeitssignal Vopt, sodass die landwirtschaftliche Arbeitsmaschine 1 mit dieser optimierten Fahrgeschwindigkeit bewegt wird. Zugleich generieren die Einstellautomaten 45 auf dieses optimierte Gutdurchsatzsignal Qopt abgestimmte optimierte Werte für verschiedenste Arbeitsparameter 37opt der landwirtschaftlichen Arbeitsmaschine 1. Nachdem die Fahrgeschwindigkeit der landwirtschaftlichen Arbeitsmaschine 1 angepasst und die optimierten Arbeitsparameter 37opt eingestellt sind wird der Regelkreis 69 in der beschriebenen Weise erneut durchlaufen, sodass sich schließlich ein kontinuierlich ablaufender Steuer- und Regelprozess ergibt.

Auf diese Weise ermittelt der erfindungsgemäße Prozesskoordinator 67 zumindest für einen gemeinsamen Parameter 71 der jeweiligen Arbeitsorgane 20 einen Wert, bei dem zumindest die durch die Steuer- und Regeleinrichtung 68 überwachten Arbeitsorgane 20 optimal arbeiten und wobei dieser ermittelte Wert des zumindest einen gemeinsamen Parameters 71 als Führungsgröße 72 für die Steuer- und Regelungseinrichtung 68 verwendet wird. Ist liegt im Rahmen der Erfindung, dass der gemeinsame Parameter 71 nicht auf den beschriebenen optimierten Erntegutduchsatz Qopt beschränkt ist sondern auch unmittelbar auf die jeweilige Schichthöhe bezogen sein kann, sodass sich dann in analoger Weise eine fahrgeschwindigkeitsabhängige Ist-Schichthöhe sowie Fahrgeschwindigkeitsregler- und Einstellautomaten-abhängig maximale Schichthöhen ergeben aus denen dann im Prozesskoordinator 67 eine optimierte Schichthöhe ermittelt wird. In analoger Weise wird die ermittelte optimierte Schichthöhe dem niedrigsten Werte der ermittelten maximalen Schichthöhen entsprechen.

### Bezugszeichenliste:

| | | | |
|---|---|---|---|
| 1 | landwirtschaftliche Arbeitsmaschine | 31 | interne Information |
| 2 | Mähdrescher | 32 | externe Information |
| 3 | Getreideschneidwerk | 33 | Information |
| 4 | Schrägförderer | 34 | Ausgangssignal |
| 5 | Erntegutstrom | 35 | Anzeigesignal |
| 6 | Dreschkorb | 36 | Arbeitsorgansignal |
| 7 | Dreschorgan | 37 | Arbeitsparameter |
| 8 | Umlenktrommel | 38 | Hotkey-Fenster |
| 9 | Trennrotor | 39 | Anzeigeelement |
| 10 | Trenneinrichtung | 40 | Qualitätsparameter |
| 11 | Körner | 41 | Überkehr |
| 12 | Rücklaufboden | 41a | Überkehrvolumen |
| 13 | Zuführboden | 41b | Kornanteil in der Überkehr |
| 14 | Siebebene | 42 | Abscheideverlust |
| 15 | Siebebene | 43 | Reinigungsverlust |
| 16 | Gebläse | 44 | Sollwertanzeiger |
| 17 | Reinigungseinrichtung | 45 | Einstellautomat |
| 18 | Elevator | 46 | Abscheideautomat |
| 19 | Korntank | 47 | Reinigungsautomat |
| 20 | Arbeitsorgan | 48 | Kennlinienfeld |
| 21 | Fahrzeugkabine | 49 | Kennlinie |
| 22 | Anzeigeeinheit | 50 | Einflussgröße |
| 23 | Steuer- und Regeleinrichtung | 51 | Bewertungsgröße |
| 24 | Bediener | 52 | Betriebspunkt |
| 25 | Bussystem | 53 | Bereich |
| 26 | Sensorsystem | 54 | Messpunkt |
| 27 | Anzeigeeinheit | 55 | Fläche |
| 28 | Fahrerassistenzsystem | 56 | Regelzustand |
| 29 | Informationen | 57 | Regelzustand |
| 30 | Recheneinheit | 58 | charakteristisches Symbol |
| | | 59 | Piktogramm |
| 60 | Display | | |
| 61 | Prozessführungsstrategie | | |
| 62 | Gehäuse | | |
| 63 | Taste | | |
| 64 | Dreh-Drück-Schalter | | |
| 65 | Sichtfenster | | |
| 66 | "Übernehmen"-Feld | | |
| 67 | Prozesskoordinator | | |
| 68 | Steuer- und Regeleinrichtung | | |
| 69 | Regelkreis | | |
| 70 | Fahrgeschwindigkeitsregler | | |
| 71 | Parameter | | |
| 72 | Führungsgröße | | |
| Qist | Ist-Gutdurchsatz | | |
| Qmax1-3 | maximaler Gutdurchsatz | | |
| Qopt | optimierter Gutdurchsatz | | |
| Vopt | optimierte Fahrgeschwindigkeit | | |
| IA | Abscheideverlustsignal | | |
| IR | Reinigungsverlustsignal | | |

## Patentansprüche

1. Selbstfahrende landwirtschaftliche Arbeitsmaschine mit Arbeitsorganen (20), die zudem zumindest eine Steuer- und Regeleinrichtung (68) und einen Fahrgeschwindigkeitsregler (70) umfasst, wobei Arbeitsparameter (37) der Arbeitsorgane durch die zumindest eine Steuer- und Regeleinrichtung (68) automatisiert einstellbar sind, wobei die landwirtschaftliche Arbeitsmaschine mit einer Fahrgeschwindigkeit bewegt wird, die in Abhängigkeit von wenigstens einem Erntegutparameter und/oder einem Arbeitsparameter (37) der landwirtschaftlichen Arbeitsmaschine durch den Fahrgeschwindigkeitsregler (70) selbsttätig geregelt wird,
**dadurch gekennzeichnet, dass**
die Steuer- und Regeleinrichtung (68) neben Arbeitsparametern (37) auch Qualitätsparameter (40) der landwirtschaftlichen Arbeitsmaschine (1) überwacht und regelt und wobei die Regelung der Arbeits- und Qualitätsparameter (37, 40) eines oder mehrerer Arbeitsorgane (20) in der landwirtschaftlichen Arbeitsmaschine zugeordneten Einstellautomaten (45) hinterlegt ist, wobei
die Einstellautomaten (45) zumindest einen Reinigungsautomat (47) und einen Abscheideautomat (46) umfassen, wobei der Abscheideautomat (46) für die Optimierung der Arbeitsweise einer der landwirtschaftlichen Arbeitsmaschine zugeordneten Trenneinrichtung (10) und der Reinigungsautomat (47) für die Optimierung der Arbeitsweise einer der landwirtschaftlichen Arbeitsmaschine zugeordneten Reinigungseinrichtung (17) programmiert und in der Steuer- und Auswerteinrichtung (23) hinterlegt ist, wobei
die selbstfahrende landwirtschaftliche Arbeitsmachine ein Prozesskoordinator (67) zusätzlich umfasst, wobei das Prozesskoordinator (67) zumindest einen gemeinsamen Parameter (71) der jeweiligen Arbeitsorgane (20) auswertet, und zumindest für diesen Parameter (71) einen Wert ermittelt, bei dem zumindest die durch die Steuer- und Regeleinrichtung (68) überwachten Arbeitsorgane (20) optimal arbeiten und wobei dieser ermittelte Wert des zumindest einen gemeinsamen Parameters (71) als Führungsgröße (72) der Steuer- und Regelungseinrichtung (68) in der Weise verwendet wird, dass der gemeinsame Parameter (71) als Führungsgröße (72) der Einstellautomaten (45-47) verwendet wird.

2. Selbstfahrende landwirtschaftliche Arbeitsmaschine nach Anspruch 1,
**dadurch gekennzeichnet, dass**
als Parameter (71) der maximal verarbeitbare Gutdurchsatz (Qmax1-3) und/oder die maximal verarbeitbare Schichthöhe der jeweiligen Arbeitsorgane (20) ausgewertet wird.

3. Selbstfahrende landwirtschaftliche Arbeitsmaschine nach Anspruch 2,
**dadurch gekennzeichnet, dass**
der Prozesskoordinator (67) aus dem für das jeweilige Arbeitsorgan (20) ermittelten maximal verarbeitbaren Gutdurchsatz (Qmax1-3) oder die maximal verarbeitbare Schichthöhe den optimierten Wert (Qopt) ermittelt und diesen als Führungsgröße (72) für die Steuer- und Regeleinrichtung (68) definiert.

4. Selbstfahrende landwirtschaftliche Arbeitsmaschine nach Anspruch 3,
**dadurch gekennzeichnet, dass**
der optimierte Wert dem niedrigsten der ermittelten maximalen Gutdurchsätze (Qmax1-3) oder Schichthöhen entspricht.

5. Selbstfahrende landwirtschaftliche Arbeitsmaschine nach einem der vorhergehenden Ansprüche,
**dadurch gekennzeichnet, dass**
die vom dem Prozesskoordinator (67) ermittelte Führungsgröße (72) der Steuer- und Regeleinrichtung (68) an den die Fahrgeschwindigkeit vorgebenden Fahrgeschwindigkeitsregler (70) übergeben wird und aus den in dem Fahrgeschwindigkeitsregler (70) hinterlegten Kennlinien eine Fahrgeschwindigkeit der landwirtschaftlichen Arbeitsmaschine (1) bestimmt wird.

6. Selbstfahrende landwirtschaftliche Arbeitsmaschine nach Anspruch 5,
**dadurch gekennzeichnet, dass**
die Fahrgeschwindigkeit der landwirtschaftlichen Arbeitsmaschine (1) in Abhängigkeit von dem vom Fahrgeschwindigkeitsregler (70) generierten Fahrgeschwindigkeitssignal (Vopt) eingestellt wird.

7. Selbstfahrende landwirtschaftliche Arbeitsmaschine nach Anspruch 1,
**dadurch gekennzeichnet, dass**
die Arbeits- und/oder Qualitätsparameter (37, 40) der landwirtschaftlichen Arbeitsmaschine (1) in einem kontinuierlich arbeitenden Regelkreis (69) mittels der Einstellautomaten (45) überwacht und geregelt werden und das der Prozesskoordinator (67) in demselben Regelkreis (69) kontinuierlich einen optimierten Wert eines Gutdurchsatzes (Qopt) und/oder einer Schichthöhe als Führungsgröße (72) der Regelung an den Fahrgeschwindigkeitsregler (70) und die Einstellautomaten (45) übergibt und diese ebenfalls kontinuierlich in Abhängigkeit von dieser Führungsgröße (72) ein Fahrgeschwindigkeitssignal (Vopt) zur Anpassung der Fahrgeschwindigkeit der landwirtschaftlichen Arbeitsmaschine (1) und optimierte Werte der Arbeitsparameter (37) generieren.

## Claims

1. A self-propelled agricultural working machine with operating units (20), which additionally comprises at least one controlling and regulating device (68) and a driving speed controller (70), wherein operating parameters (37) of the operating units can be automatically set by the at least one controlling and regulating device (68), wherein the agricultural working machine is moved at a driving speed which is autonomously controlled by the driving speed controller (70) as a function of at least one harvested material parameter and/or an operating parameter (37) of the agricultural working machine,
**characterized in that**
in addition to operating parameters (37), the controlling and regulating device (68) also monitors and controls quality parameters (40) of the agricultural working machine (1) and wherein the control of the operating and quality parameters (37, 40) of one or more operating units (20) is stored in the automatic setting systems (45) associated with the agricultural working machine, wherein
the automatic setting systems (45) comprise at least one automatic cleaning system (47) and an automatic separating system (46), wherein the automatic separating system (46) is programmed for the optimisation of the mode of operation of a separating device (10) associated with the agricultural working machine and the automatic cleaning system (47) is programmed for the optimisation of the mode of operation of a cleaning device (17) associated with the agricultural working machine and stored in the controlling and evaluation device (23), wherein
the self-propelled agricultural working machine additionally comprises a process coordinator (67), wherein the process coordinator (67) evaluates at least one common parameter (71) of the respective operating units (20) and determines a value at least for this parameter (71) at which at least the operating units (20) monitored by the controlling and regulating device (68) operate optimally and wherein this determined value for the at least one common parameter (71) is used as a reference variable (72) for the controlling and regulating device (68) in a manner such that the common parameter (71) is used as the reference variable (72) for the automatic setting systems (45-47).

2. The self-propelled agricultural working machine according to claim 1,
**characterized in that**
the maximum processable material throughput (Qmax1-3) and/or the maximum processable layer depth for the respective operating units (20) are evaluated as the parameter (71).

3. The self-propelled agricultural working machine according to claim 2,
**characterized in that**
the process coordinator (67) determines the optimised value (Qopt) from the maximum processable material throughput (Qmax1-3) or the maximum processable layer depth determined for the respective operating unit (20) and defines this as the reference variable (72) for the controlling and regulating device (68).

4. The self-propelled agricultural working machine according to claim 3,
**characterized in that**
the optimised value corresponds to the lowest of the determined maximum material throughputs (Qmax1-3) or layer depths.

5. The self-propelled agricultural working machine according to one of the preceding claims,
**characterized in that**
the reference variable (72) of the controlling and regulating device (68) determined by the process coordinator (67) is transferred to the driving speed controller (70) which specifies the driving speed and a driving speed for the agricultural working machine (1) is defined from the characteristic curves stored in the driving speed controller (70).

6. The self-propelled agricultural working machine according to claim 5,
**characterized in that**
the driving speed of the agricultural working machine (1) is set as a function of the driving speed signal (Vopt) generated by the driving speed controller (70).

7. The self-propelled agricultural working machine according to claim 1,
**characterized in that**
the operating and/or quality parameters (37, 40) of the agricultural working machine (1) are monitored and controlled in a continuously operating control loop (69) by means of the automatic setting systems (45), and in the same control loop (69), the process coordinator (67) continuously transfers an optimised value for a material throughput (Qopt) and/or a layer depth as the reference variable (72) for the control to the driving speed controller (70) and the automatic setting systems (45) and these also continuously generate, as a function of this reference variable (72), a driving speed signal (Vopt) for adjusting the driving speed of the agricultural working machine (1) and optimised values for the operating parameters (37).

## Revendications

1. Machine de travail agricole automotrice comprenant des organes de travail (20), laquelle inclut en outre un équipement de commande et de régulation (68) et un régulateur de vitesse de marche (70), des paramètres de travail (37) des organes de travail étant réglables de manière automatisée par l'intermédiaire du au moins un équipement de commande et de régulation (68) , la machine de travail agricole étant déplacée à une vitesse de marche qui est régulée automatiquement par l'intermédiaire du régulateur de vitesse de marche (70) en fonction d'au moins un paramètre de produit récolté et/ou d'un paramètre de travail (37) de la machine de travail agricole,
**caractérisée en ce que**, en plus de paramètres de travail (37), l'équipement de commande et de régulation (68) surveille et régule aussi des paramètres de qualité (40) de la machine de travail agricole (1), et la régulation des paramètres de travail et de qualité (37, 40) d'un ou plusieurs organes de travail (20) étant enregistrée dans des automates de réglage (45) associés à la machine de travail agricole,
les automates de réglage (45) incluant au moins un automate de nettoyage (47) et un automate de séparation (46), l'automate de séparation (46) étant programmé pour l'optimisation du mode de travail d'un équipement de division (10) associé à la machine de travail agricole et l'automate de nettoyage (47) étant programmé pour l'optimisation du mode de travail d'un équipement de nettoyage (17) associé à la machine de travail agricole, tous deux étant enregistrés dans l'équipement de commande et d'analyse (23),
la machine de travail agricole automotrice incluant en outre un coordinateur de processus (67), le coordinateur de processus (67) analysant au moins un paramètre commun (71) des organes de travail respectifs (20) et déterminant pour ce paramètre (71) une valeur à laquelle au moins les organes de travail (20) surveillés par l'équipement de commande et de régulation (68) fonctionnent optiquement, et cette valeur déterminée du au moins un paramètre commun (71) étant utilisée comme grandeur de guidage (72) de l'équipement de commande et de régulation (68), de façon que le paramètre commun (71) soit utilisé comme grandeur de guidage (72) des automates de réglage (45-47).

2. Machine de travail agricole automotrice selon la revendication 1, **caractérisée en ce que**
comme paramètre (71) est analysé le débit maximum traitable de produit récolté (Qmax1-3) et/ou la hauteur de couche maximale traitable des organes de travail respectifs (20).

3. Machine de travail agricole automotrice selon la revendication 2,
**caractérisée en ce que**
le coordinateur de processus (67) détermine la valeur optimisée (Qopt) à partir du débit maximum traitable de produit récolté (Qmax1-3) déterminé pour l'organe de travail respectif (20) ou la hauteur de couche maximale traitable et définit celle-ci comme grandeur de guidage (72) pour l'équipement de commande et de régulation (68).

4. Machine de travail agricole automotrice selon la revendication 3,
**caractérisée en ce que**
la valeur optimisée correspond au plus bas des débits de produit récolté (Qmax1-3) ou hauteurs de couche maximum déterminés.

5. Machine de travail agricole automotrice selon une des revendications précédentes,
**caractérisée en ce que**
la grandeur de guidage (72) de l'équipement de commande et de régulation (68) déterminée par le coordinateur de processus (67) est transmise au régulateur de vitesse de marche (70) prescrivant la vitesse de marche et, à partir des courbes caractéristiques enregistrées dans le régulateur de vitesse de marche (70), une vitesse de marche de la machine de travail agricole (1) est déterminée.

6. Machine de travail agricole automotrice selon la revendication 5,
**caractérisée en ce que**
la vitesse de marche de la machine de travail agricole (1) est réglée en fonction du signal de vitesse de marche (Vopt) généré par le régulateur de vitesse de marche (70).

7. Machine de travail agricole automotrice selon la revendication 1,
**caractérisée en ce que** les paramètres de travail et/ou de qualité (37, 40) de la machine de travail agricole (1) sont surveillés et régulés dans un circuit régulateur fonctionnant en continu (69) au moyen de l'automate de réglage (45), et **en ce que** le coordinateur de processus (67) dans le même circuit régulateur (69) transmet en continu une valeur optimisée d'un débit de produit récolté (Qopt) et/ou d'une hauteur de couche comme grandeur de guidage (72) de la régulation au régulateur de vitesse de marche (70) et aux automates de réglage (45) et ceux-ci génèrent également en continu, en fonction de cette grandeur de guidage (72), un signal de vitesse de marche (Vopt) pour adapter la vitesse de marche de la machine de travail agricole (1) et des valeurs optimisées des paramètres de travail (37) .
